# EUROPEAN PATENT SPECIFICATION

(11) **EP 1 602 583 B1**
(45) Date of publication and mention of the grant of the patent: **07.03.2007**
(21) Application number: 05011541.9
(22) Date of filing: 27.05.2005
(51) Int. Cl.: B65B 35/30, B65G 47/74

(54) **Unit for transferring products from a packaging machine to a feeding line of a boxing machine**
Einheit für die Übergabe von Produkten von einer Verpackungsmaschine zur Verschachtelung
Unité pour le transfer des produits d'une machine de conditionnement à une ligne d'alimentation d'une machine de boîte

(30) Priority: 31.05.2004 IT BO20040346
(43) Date of publication of application: 07.12.2005
(73) Proprietor: MARCHESINI GROUP S.p.A., 40065 Pianoro (Bologna) (IT)
(72) Inventor: Monti, Giuseppe, 40065 Pianoro (Bologna) (IT)
(74) Representative: Dall'Olio, Giancarlo

(56) References cited:
- US-A- 4 183 192
- US-A- 5 873 448
- US-A- 5 893 259

## Description

The present invention relates to automatic packaging of various products, in particular liquid solutions, doughy substances, granular and/or pulverulent substances for food, pharmaceutical, cosmetic and cleansing use. In the specific case, the present invention relates to a unit for transferring packaged products from a packaging machine to a feeding line of a boxing machine. There are known bagging machines, which, according to widely known techniques, package food granular substances into substantially tubular bags and release them directly onto a feeding line of a boxing machine, situated below. The tubular bags are obtained from a continuous sheet, of e.g. thermo-weldable paper, which is previously cut, so as to define a plurality of vertical strips, arranged one beside another. Afterwards, each of the vertical strips is brought to a tubular configuration and welded longitudinally in regions corresponding to the lateral edges. The bottom of each vertical strip is welded in step relation with the longitudinal welding and then the so obtained tubular bags are filled with a batched quantity of a prefixed granular substance. When the filling is completed, each strip is welded at top and cut near the welded portion, so as to cause its detachment from the continuous sheet. In this way, a desired tubular package is obtained, suitably sealed, and the bottom of the subsequent tubular structure is formed.

The so obtained sealed bags, arranged vertical one beside another, are generally released onto a chute, which is situated below and which conveys them, in bulk, to a conveying belt situated in front of the bagging machine.

This configuration makes the front area of the bagging machine inaccessible for the set up, as well as for maintenance.

The main drawback lies in the fact that the chute releases the bags onto the conveying belt in uncontrolled configurations, doubtlessly not suitable to feed directly a boxing machine for introducing the so obtained tubular bags into cases, usually of cardboard.

The object of the present invention is to avoid the above drawbacks by proposing a unit for transferring products, in controlled configuration, from a packaging machine, in particular a bagging machine, to a feeding line of a boxing machine, which assures best versatility and flexibility standards, independently from the type, size and number of treated products.

Another object of the present invention is to propose a transferring unit, which is particularly reliable and functional and assures high production rate in any operation conditions.

A further object of the present invention is to propose a transferring unit, which is capable of particularly rapid and easy adapting at the size changeover and to the number of packaged products in relation to the characteristics of the operation cycle of the packaging machine, thus facilitating the set up and maintenance thereof.

The above mentioned objects are obtained in accordance with the contents of the characterizing portion of claim 1. Further advantageous configurations are reported in the dependent claims.

The characteristic features of the invention will be pointed out in the following description of some preferred but not limited embodiments, with reference to the enclosed figures, in which:

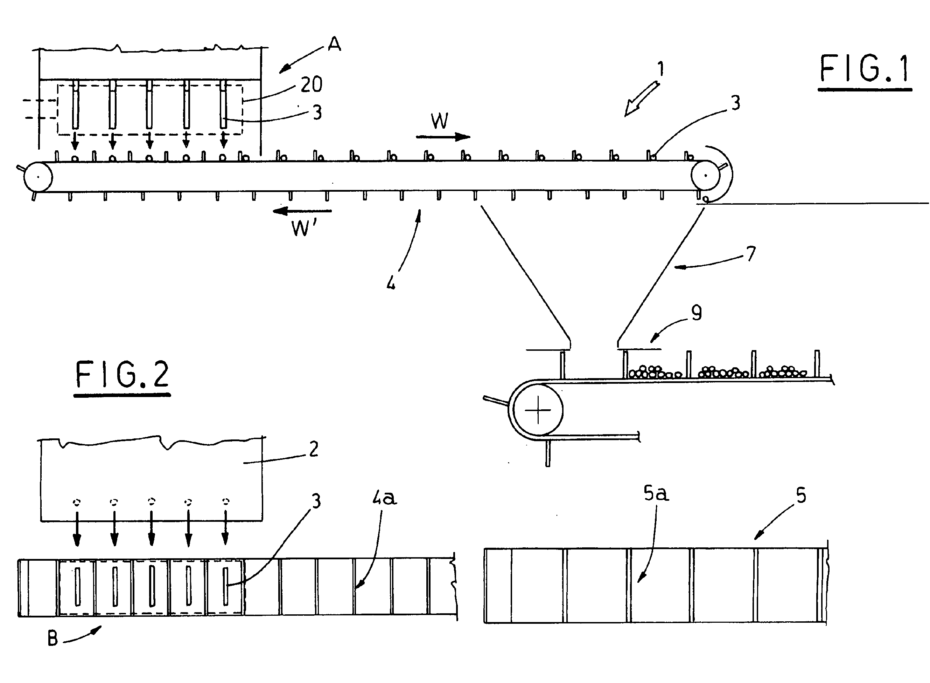

- Figures 1 and 2 are schematic, lateral and top views of the transferring unit, proposed by the present invention;
- Figures from 3 to 9 are schematic, enlarged, respective lateral views of the proposed transferring unit in a sequence of particularly significant operation steps;
- Figure 10 is a schematic, partial, lateral view of an extremely significant embodiment.

Having regards the above described Figures, the reference numeral 1 indicates the proposed unit for transferring products 3 released by the outlet line of a packaging machine 2, in particular a bagging machine, to a feeding line 5 of a boxing machine (not shown).

The unit 1 includes a conveying belt 4, interposed between the outlet line and the feeding line 5 and having a plurality of seats 4a, defined by corresponding separators.

Each of the seats 4a receives one bag 3, e.g. a tubular bag, released by the outlet line of the bagging machine 2.

The conveying belt 4 extends preferably laterally, that is crosswise to the bagging machine 2 and is aligned vertically with respect to the feeding line 5.

Transferring means 20, advantageously connected to the outlet line of the bagging machine 2, pick up bags 3 in vertical configuration A and release them into the seats 4a of the conveying belt 4 in horizontal configuration B.

The conveying belt 4, preferably moved continuously, defines relative runs, an upper run 17a and a lower run 17b, operated in corresponding, opposite feeding directions W, W'.

In the portion Y of passage between the upper run 17a and the lower run 17b, the conveying belt 4 is connected to a curved plate 6, preferably stationary, which faces and closes the seats 4a in order to hold the bags 3 contained in the seats 4a.

A hopper 7, situated near the lower run 17b of the conveying belt 4, in cascade with respect to the curved plate 6, receives the bags 3 released by the seats 4a of the lower run 17b and disengaging from the curved plate 6, and conveys the disengaged bags 3 toward a compartment 5a made on the feeding line 5.

The hopper 7 includes sensor means 8, advantageously situated near the inlet mouth, for counting the bags 3 released in sequence by the conveyor 4.

The proposed transferring unit 1 includes a straight plate 60, situated between the lower run 17b of the conveying belt 4 and the hopper 7, downstream with respect to the curved plate 6.

The straight plate 60 is operated to translate in parallel feeding direction H, or in opposite direction H' with respect to the feeding direction W' of the lower run 17b, respectively to close, or open, the seats 4a, which disengage from the curved plate 6, so as to hold, or release, the bags contained therein, and to forbid, or to allow their conveying to the hopper 7.

The straight plate 60 is enabled to translate, in one direction or the other, by the sensor means 8, that is in function of the counting of the bags 3, with a speed at least equal to the speed of the lower run 17b, preferably slightly higher.

Advantageously, the hopper 7 has a moving bulkhead 9, enabled by the sensor means 8 to allow the closing, or opening, of the bottom of the hopper 7, then, to prevent, or to allow, the conveying of the bags 3 toward the dwelling compartment 5a of the feeding line 5.

The feeding line 5 is preferably operated stepwise, enabled by the sensor means 8, that is in relation to the counting of the bags 3.

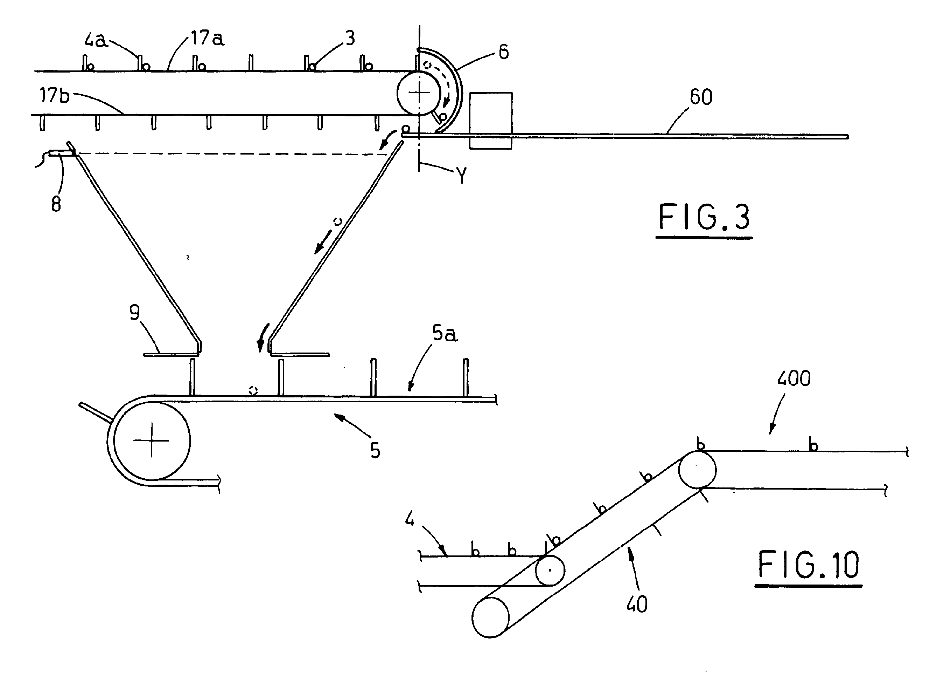

The operation of the proposed transferring unit 1 will be described briefly, beginning from a generic intermediate working step, in which the straight plate 60 is withdrawn, the bottom of the hopper 7 is open (the moving bulkhead 9 shifted) and faces a compartment 5a of the feeding line 5, dwelling and still empty (Figure 3).

The bags 3 released by the transferring means 20, in horizontal configuration B, into the seats 4a of the conveying belt 4, are moved by the latter up to the curved plate 6, which closes the seats 4a transiting between the upper run 17a and the lower run 17b, in a region corresponding to the passage portion Y, preventing the bags contained therein from going out.

Downstream of the curved plate 6, with the straight plate 60 withdrawn, the bags 3 can fall freely into the hopper 7, suitably counted by the sensor means 8 and can be sent directly to the compartment 5a dwelling below.

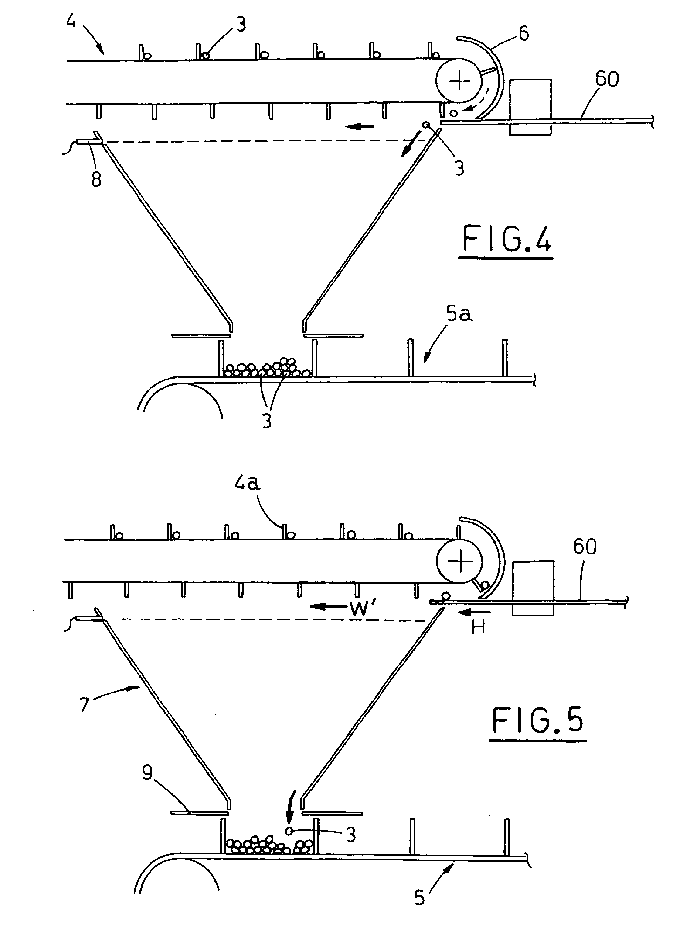

As soon as the sensor means 8 detect the prefixed number of bags 3 entered into the hopper 7, they enable the operation of the straight plate 60, so as to suspend the releasing of the bags 3 into the hopper 7, and enable the operation of the feeding line 5 by one step, that is the feeding of the full compartment 5a, so that a subsequent empty compartment 5a moves under the bottom of the hopper 7 (Figures 4, 5).

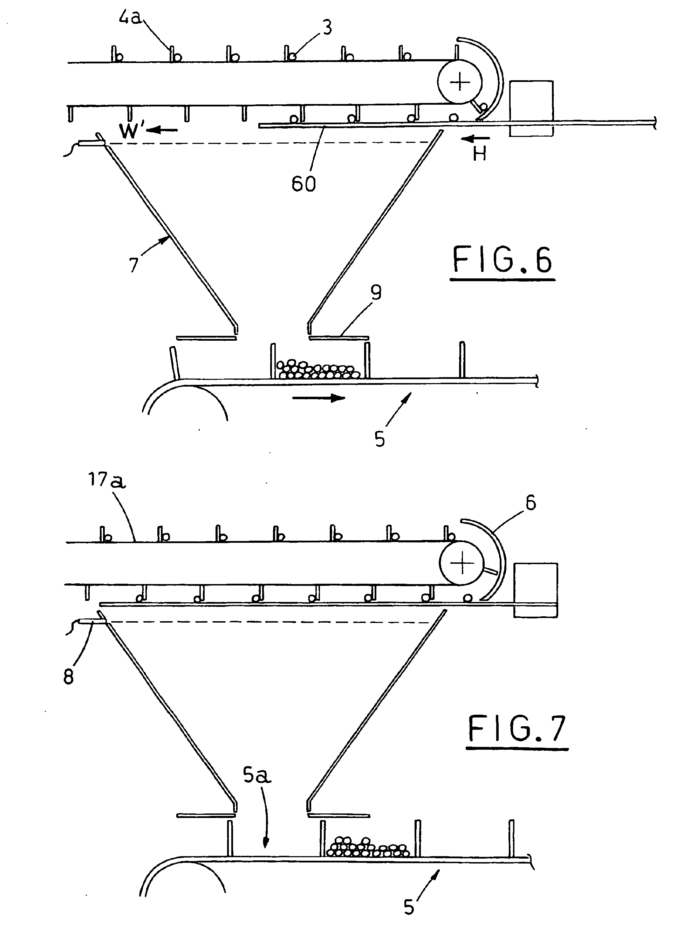

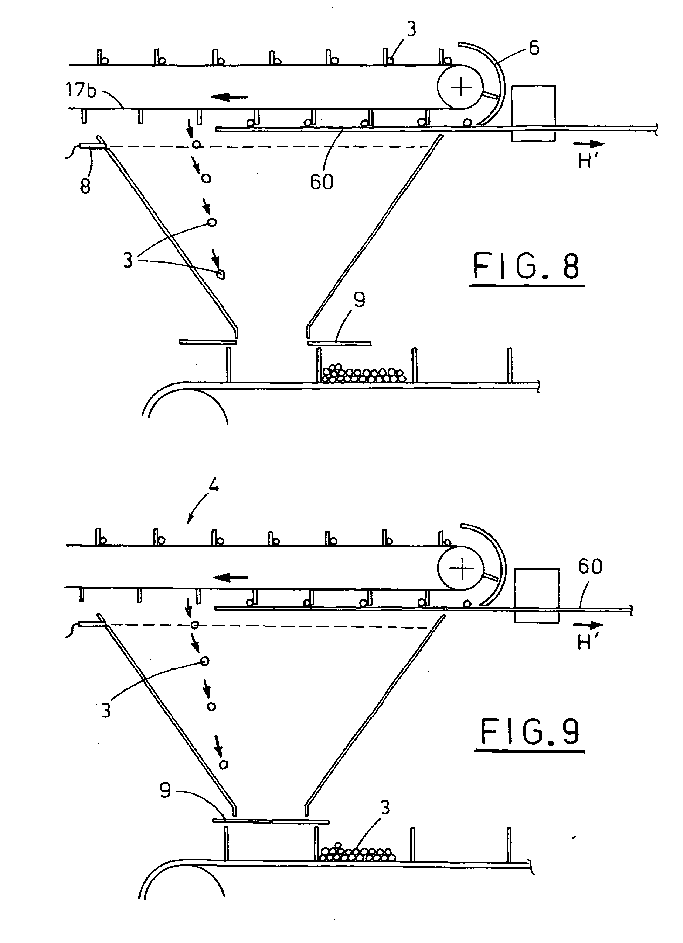

The translation of the straight plate 60 in a direction H parallel to the feeding direction W' of the lower run 17b, with the relative speed substantially zero, allows to close the seats 4a, which disengage from the curved plate 6 to hold the bags 3 contained therein and prevent them from being conveyed toward the hopper 7 (Figures 6, 7).

The positioning of the empty compartment 5a in correspondence to the bottom of the hopper 7 enables the operation of the straight plate 60 in a direction H' opposite to the feeding direction W' of the lower run 17b, so as to resume the releasing of the bags 3 into the hopper 7.

The translation of the straight plate 60 in the opposite direction H' allows to open again the seats 4a facing the hopper 7, previously closed by the straight plate 60 (Figure 8).

During the opposite translation H' of the straight plate 60, due to the direction discordance with the lower run 17b, the bags 3 are released into the hopper 7 with a double rate with respect to the predetermined conditions, with the straight plate 60 retracted.

During this step, it is suitable to limit the speed of the straight plate 60, preferably equal or slightly higher than the one of the lower run 17b, so as to avoid possible calculation errors of the sensor means 8 caused by possible alignment of more bags 3 during the releasing step.

When the sensor means 8 detect the prefixed number of bags 3 entered into the hopper 7, the cycle repeats in the same way: the operation of the straight plate 60 is enabled, so as to suspend the releasing of the bags 3, as well as to operate the feeding line 5 by one step to move the full compartment 5a, so that a subsequent empty compartment 5a moves to face the bottom of the hopper 7.

Advantageously, the loading mouth of the hopper 7 is wide enough to cover the number of seats 4a, transiting in the period of time necessary for the feeding line 5 to position a new, empty compartment 5a, in the region corresponding to the discharge mouth of the hopper 7.

According to a different operation mode, it is possible to close the bottom of the hopper 7, during its loading, by the moving bulkhead 9, so as to accumulate a prefixed number of bags 3 in the hopper 7, and then to open the bulkhead 9, in order to release simultaneously the bags 3 into the compartment 5a dwelling below (Figure 9).

In this way, it is possible to perform a supplementary counting of the bags in case of anomaly of the feeding line 5 of the boxing machine.

However, in relation to the particulars, the moving bulkhead 9 can be avoided in the bottom of the hopper 7.

Figure 10 shows a particularly significant embodiment, including a plurality of conveying belts 4, 40, 400, arranged downstream, each of which has corresponding seats for receiving an bag 3.

In this case, a fore conveying belt 4 receives products released by the outlet line of the bagging machine 2 and a rear conveying belt 400 cooperates with the plates, curved plate 6 and straight plate 60, and with the hopper 7 to release the bags 3 into the compartments 5a of the feeding line 5, in the above described way.

A plurality of conveying belts, situated between the outlet line of the bagging machine and the feeding line of the boxing machine, allows advantageously to separate, if required, the batching environment from the boxing environment (generally required in the pharmaceutical field).

If the bagging machine 2 includes means for selective rejection of the bags 3, some seats 4a can remain empty.

This does not create any problem for the correct operation of the proposed transferring unit 1, since the operation of the straight plate 60 and of the feeding line 5, and possibly of the moving bulkhead 9 (if present), is subjected to the sensor means 8, that is to the counting of the bags 3 released into the hopper 7.

It is obvious how the proposed unit allows the transfer of products in controlled configuration from a packaging machine, in particular bagging machine, to a feeding line of a boxing machine, assuring best versatility and flexibility standards.

The proposed transferring unit is particularly reliable and functional, and assures high production rate in any operation condition, independently from the size and number of treated products.

The unit can advantageously adapt, in a particularly rapid and easy way, to the changes of the packaged products size, in relation to the specifics of the operation cycle of the packaging machine.

The transferring unit can facilitate the packaging machine set up and maintenance operations.

The proposed transferring unit is particularly indicated for the automatic packaging of liquid substances, doughy substances, granular and/or pulverulent substances, for food, pharmaceutical, cosmetic and cleansing use.

It is understood that the proposed invention has been described, with reference to the enclosed figures, as a mere, not limiting example. Therefore, it is obvious that any changes or variants applied thereto remain within the protective scope defined by the following claims.

## Claims

1. Unit for transferring products from a packaging machine to a feeding line of a boxing machine, with the packaging machine (2) having an outlet line, feeding a plurality of packaged products (3), **characterized in that** it includes: at least one conveying belt (4), situated between said outlet line and feeding line (5), and having a plurality of seats (4a), each of which receives at least one product (3) released by said outlet line of the packaging machine (2), said conveying belt (4) defining corresponding runs, an upper run (17a) and a lower run (17b), operated in corresponding, opposite feeding directions (W, W'); first guiding means (6), associated to said conveying belt (4) at least in a region corresponding to the passage portion (Y) between the upper run (17a) and the lower run (17b), and closing the seats (4a) facing them, in order to hold the products (3) contained therein; conveying means (7), situated near the lower run (17b) of the conveying belt (4), downstream with respect to said first guiding means (6), and receiving the products (3) released by the seats (4a) of said lower run (17b), disengaged from said first guiding means (6), and conveying said products (3) to a compartment (5a) made in the feeding line (5) below; sensor means (8), associated to said conveying means (7) and counting the number of products (3) received by the latter; second guiding means (60), situated between the lower run (17b) of the conveying belt (4) and said conveying means (7), downstream with respect to said first guiding means (6), and enabled by said sensor means (8) to move in parallel directions (H), or opposite directions (H'), with respect to the feeding direction (W') of said lower run (17b), respectively to close or open the seats (4a), which disengage from said first guiding means (6), respectively to hold or release the products (3) contained therein and prevent or allow their conveying to the conveying means (7).

2. Unit, as claimed in claim 1, **characterized in that** it includes partition means (9), associated to said conveying means (7) and enabled by said sensor means (8) to allow, or prevent, the conveying of the products (3) released by the conveying means (7) to a compartment (5a) of the feeding line (5) below.

3. Unit, as claimed in claim 1 or 2, **characterized in that** it includes a plurality of conveying belts (4, 40, 400) arranged one after another, each of which having corresponding seats for receiving at least one product (3); with a fore conveying belt (4) receiving products released by the outlet line of the packaging machine (2); and with a rear conveying belt (400) cooperating with said first guiding means (6) and second guiding means (60), and said conveying means (7) to release said products onto the feeding line (5).

4. Unit, as claimed in one of the claims from 1 to 3, **characterized in that** said second guiding means (60) are operated to move with a linear speed at least equal to the speed of said the lower run (17b).

5. Unit, as claimed in claim 4, **characterized in that** said second guiding means (60) include at least one straight plate, situated downstream with respect to said first guiding means (6), below them.

6. Unit, as claimed in one of the claims from 1 to 5, **characterized in that** said first guiding means (6) are stationary.

7. Unit, as claimed in one of the claims from 1 to 6, **characterized in that** said first guiding means (6) include at least one curved plate.

8. Unit, as claimed in one of the claims from 1 to 7, **characterized in that** said conveying means (7) include at leas one hopper.

9. Unit, as claimed in one of the claims from 2 to 7, **characterized in that** said conveying means (7) include at least one hopper, and **in that** said partition means (9) include at least one bulkhead, enabled by said sensor means (8) to close or open the bottom of said hopper (7).

10. Unit, as claimed in one of the claims from 1 to 3, **characterized in that** it includes, transferring means (2), associated to said outlet line of said packaging machine (2) and withdrawing packaged products (3) in a substantially vertical configuration (A) and releasing them into the seats (4a) of the conveying belt (4) in a substantially horizontal configuration (B).

11. Unit, as claimed in one of the claims from 1 to 10, **characterized in that** said conveying belt (4) is operated in a continuous way.

12. Unit, as claimed in one of the claims from 1 to 11, **characterized in that** said conveying belt (4) is vertically aligned with respect to said feeding line (5).

13. Unit, as claimed in one of the claims from 1 to 12, **characterized in that** said conveying belt (4) extends laterally, that is crosswise with respect to said packaging machine (2).

14. Unit, as claimed in one of the claims from 1 to 13, **characterized in that** said feeding line (5) of said boxing machine is operated stepwise.

15. Unit, as claimed in claim 14, **characterized in that** said feeding line (5) is enabled by said sensor means (8).

16. Unit, as claimed in any of the previous claims, **characterized in that** said packaging machine (2) is a bagging machine.

17. Unit, as claimed in any of the previous claims, **characterized in that** said products (3) are packages with tubular shape.

## Patentansprüche

1. Einheit für die Übergabe von Produkten von einer Verpackungsmaschine an ein Förderband einer Verschachtelungsmaschine, wobei die Verpackungsmaschine (2) ein Auslaßband aufweist, das eine Anzahl von verpackten Produkten (3) transportiert, **dadurch gekennzeichnet, daß** diese umfaßt: wenigstens ein Förderband (4), das zwischen dem besagten Auslaßband und dem Förderband (5) angeordnet ist und das eine Anzahl von Aufnahmen (4a) aufweist, von denen jede wenigstens ein Produkt (3) aufnimmt, das durch das besagte Auslaßband der Verpackungsmaschine (2) abgegeben wird, wobei das besagte Förderband (4) entsprechende Läufe aufweist, einen oberen Lauf (17a) und einen unteren Lauf (17b), die in entsprechende entgegengesetzte Förderrichtungen (W, W') angetrieben werden; erste Führungselemente (6), die mit dem besagtem Förderband (4) wenigstens in einem Bereich verbunden sind, der dem Durchgangsteil (Y) zwischen dem oberen Lauf (17a) und dem unteren Lauf (17b) entspricht und der die Aufnahmen (4a) verschließt, die diesem gegenüberliegen, um die darin enthaltenen Produkte (3) zurückzuhalten; Fördermittel (7), die nahe dem unteren Lauf (17b) des Förderbandes (4) stromabwärts in Bezug auf die besagten ersten Führungselemente (6) angeordnet sind und die die Produkte (3), die von den Aufnahmen (4a) des besagten unteren Laufes (17b) abgegeben werden und die von den besagten ersten Führungselementen (6) getrennt werden, aufnehmen und die besagten Produkte (3) zu einem Behälter (5a) transportieren, der in dem darunter befindlichen Förderband (5) angeordnet ist; Sensormittel (8), die mit den besagten Fördermitteln (7) verbunden sind und die die Anzahl der Produkte (3) zählen, die von dem letzteren aufgenommen werden; zweite Führungselemente (60), die zwischen dem unteren Lauf (17b) des Förderbandes (4) und den besagten Mitteln (7) stromabwärts in Bezug auf die besagten ersten Führungselemente (6) angeordnet sind und die durch die besagten Sensormittel (8) derart angesteuert werden, daß sie sich in parallele Richtungen (H) beziehungsweise in entgegengesetzte Richtungen (H') in Bezug auf die Förderrichtung (W') des besagten unteren Laufes (17b) bewegen, um die Aufnahmen (4a) zu verschließen oder zu öffnen, die sich von den besagten ersten Führungselementen (6) lösen, um die darin enthaltenen Produkte zurückzuhalten beziehungsweise um diese freizugeben (3) und ihre Überführung zu den Fördermitteln (7) zu verhindern oder zu ermöglichen.

2. Einheit gemäß Anspruch 1, **dadurch gekennzeichnet, daß** sie Partitionierungsmittel (9) umfaßt, die mit den besagten Fördermitteln (7) verbunden sind und die durch die besagten Sensormittel (8) aktiviert werden, um das Überführen der Produkte (3), die durch die Fördermittel (7) freigegeben werden, zu einem Behälter (5a) des unteren Förderbandes (5) zu ermöglichen oder zu verhindern.

3. Einheit gemäß Anspruch 1 oder 2, **dadurch gekennzeichnet, daß** sie eine Anzahl von hintereinander angeordneten Fördermitteln (4, 40, 400) umfaßt, von denen jedes entsprechende Aufnahmen für die Aufnahme wenigstens eines Produktes (3) aufweist; mit einem vorderen Förderband (4), das die Produkte aufnimmt, die vom Auslaßband der Verpackungsmaschine (2) abgegeben werden; und mit einem hinteren Förderband (400), das mit den besagten ersten Führungselementen (6) und den zweiten Führungselementen (60) und mit den besagten Fördermitteln (7) zusammenwirkt, um die besagten Produkte an das Förderband (5) abzugeben.

4. Einheit gemäß einem der Ansprüche 1 bis 3, **dadurch gekennzeichnet, daß** die besagten zweiten Führungselemente (60) derart angesteuert werden, daß sie sich mit einer linearen Geschwindigkeit bewegen, die wenigstens gleich der Geschwindigkeit des besagten unteren Laufes (17b) ist.

5. Einheit gemäß Anspruch 4, **dadurch gekennzeichnet, daß** die besagten zweiten Führungselemente (60) wenigstens eine gerade Platte aufweisen, die stromabwärts in Bezug auf die besagten ersten Führungselemente (6), unterhalb dieser, angeordnet ist.

6. Einheit gemäß einem der Ansprüche 1 bis 5, **dadurch gekennzeichnet, daß** die besagten ersten Führungselemente (6) stationär sind.

7. Einheit gemäß einem der Ansprüche 1 bis 6, **dadurch gekennzeichnet, daß** die besagten ersten Führungselemente (6) wenigstens eine gebogene Platte aufweisen.

8. Einheit gemäß einem der Ansprüche 1 bis 7, **dadurch gekennzeichnet, daß** die besagten Fördermittel (7) wenigstens einen Zufuhrbehälter aufweisen.

9. Einheit gemäß einem der Ansprüche 2 bis 7, **dadurch gekennzeichnet, daß** die besagten Fördermittel (7) wenigstens einen Zufuhrbehälter aufweisen und **dadurch**, daß die besagten Partitionierungsmittel (9) wenigstens ein Schott aufweisen, das durch die besagten Sensormittel (8) angesteuert wird, um die Unterseite des besagten Zufuhrbehälters (7) zu verschließen oder zu öffnen.

10. Einheit gemäß einem der Anspruche 1 bis 3, **dadurch gekennzeichnet, daß** sie Transfermittel (2) umfaßt, die mit dem besagten Auslaßband der besagten Verpackungsmaschine (2) zusammenwirken und die verpackte Produkte (3) in einer im wesentlichen vertikalen Konfiguration (a) entnehmen und sie in einer im wesentlichen horizontalen Konfiguration (b) in die Aufnahmen (4a) des Förderbandes (4) abgeben.

11. Einheit gemäß einem der Ansprüche 1 bis 10, **dadurch gekennzeichnet, daß** das besagte Förderband (4) in einer kontinuierlichen Weise angetrieben wird.

12. Einheit gemäß einem der Ansprüche 1 bis 11, **dadurch gekennzeichnet, daß** das besagte Förderband (4) in Bezug auf das besagte Förderband (5) vertikal ausgerichtet ist.

13. Einheit gemäß einem der Ansprüche 1 bis 12, **dadurch gekennzeichnet, daß** das besagte Förderband (4) lateral, das heißt senkrecht in Bezug auf die besagte Verpackungsmaschine (2), angeordnet ist.

14. Einheit gemäß einem der Ansprüche 1 bis 13, **dadurch gekennzeichnet, daß** das besagte Förderband (5) der besagten Verpackungsmaschine in einer diskontinuierlichen Weise angetrieben wird.

15. Einheit gemäß einem der Ansprüche 1 bis 14, **dadurch gekennzeichnet, daß** das besagte Förderband (5) durch die besagten Sensormittel (8) angesteuert wird.

16. Einheit gemäß einem der Ansprüche 1 bis 15, **dadurch gekennzeichnet, daß** die besagte Verpackungsmaschine (2) eine Einsackmaschine ist.

17. Einheit gemäß einem der vorhergehenden Ansprüche, **dadurch gekennzeichnet, daß** die besagten Produkte (3) Pakete in röhrenförmiger Form sind.

## Revendications

1. Unité pour transférer des produits à partir d'une machine d'emballage vers une ligne d'alimentation d'une encaisseuse, la machine d'emballage (2) ayant une ligne de sortie, alimentant une pluralité de produits emballés (3), **caractérisée en ce que** l'unité comprend : au moins une bande convoyeuse (4), située entre ladite ligne de sortie et la ligne d'alimentation (5), et ayant une pluralité de logements (4a), chacun desquels recevant au moins un produit (3) libéré par ladite ligne de sortie de la machine d'emballage (2), ladite bande convoyeuse (4) définissant des courses correspondantes, une course supérieure (17a) et une course inférieure (17b), actionnées dans des directions d'alimentation opposées correspondantes (W, W'); des premiers moyens de guidage (6), associés à ladite bande convoyeuse (4) au moins dans une région correspondante à la partie de passage (Y) entre la course supérieure (17a) et la course inférieure (17b), et fermant les logements (4a) leur faisant face, afin de maintenir les produits contenus à l'intérieur; des moyens de convoyage (7), situés à proximité de la course inférieure (17b) de la bande convoyeuse (4), en aval par rapport auxdits premiers moyens de guidage (6), et recevant les produits (3) libérés par les logements (4a) de ladite course inférieure (17b), dégagés desdits premiers moyens de guidage (6), et convoyant lesdits produits (3) vers un compartiment (5a) prévu dans la ligne d'alimentation (5) en dessous; des moyens de détection (8), associés auxdits moyens de convoyage (7) et comptant le nombre de produits (3) reçus par ces derniers; des deuxièmes moyens de guidage (60), situés entre la course inférieure (17b) de la bande convoyeuse (4) et lesdits moyens de convoyage (7), en aval par rapport auxdits premiers moyens de guidage (6), et activé par lesdits moyens de détection (8) pour se déplacer dans des directions parallèles (H), ou des directions opposées (H'), par rapport à la direction d'alimentation (W') de ladite course inférieure (17b), respectivement pour fermer ou ouvrir les logements (4a), qui se dégage desdits premiers moyens de guidage (6), respectivement pour maintenir ou libérer les produits (3) contenus à l'intérieur et empêcher ou permettre leur convoyage vers lesdits moyens de convoyage (7).

2. Unité selon la revendication 1, **caractérisée en ce qu'**elle comprend des moyens de séparation (9), associés auxdits moyens de convoyage (7) et activés par lesdits moyens de détection (8) pour permettre, ou empêcher, le convoyage des produits (3) libérés par les moyens de convoyage (7) vers un compartiment (5a) de la ligne d'alimentation (5) en dessous.

3. Unité selon la revendication 1 ou 2, **caractérisée en ce qu'**elle comprend un pluralité de bandes convoyeuses (4, 40, 400) agencée l'une après l'autre, chacune desquelles ayant des logements correspondants pour recevoir au moins un produit (3); avec une bande convoyeuse avant (4) recevant des produits libérés par la ligne de sortie de la machine d'emballage (2); et avec un bande convoyeuse arrière (400) coopérant avec lesdits premiers moyens de guidage (6) et deuxièmes moyens de guidage (60), et lesdits moyens de convoyage (7) pour libérer lesdits produits sur la ligne d'alimentation (5).

4. Unité selon l'une quelconque des revendications 1 à 3, **caractérisée en ce que** lesdits deuxièmes moyens de guidage (60) sont actionnés pour se déplacer avec une vitesse linéaire au moins égale à la vitesse de ladite course inférieure (17b).

5. Unité selon la revendication 4, **caractérisée en ce que** lesdits deuxièmes moyens de guidage (60) comprennent au moins une plaque droite, située en aval par rapport auxdits premiers moyens de guidage (6) en- dessous d'eux.

6. Unité selon l'une quelconque des revendications 1 à 5, **caractérisée en ce que** lesdits premiers moyens de guidage (6) sont fixes.

7. Unité selon l'une quelconque des revendications 1 à 6, **caractérisée en ce que** lesdits premiers moyens de guidage (6) comprennent au moins une plaque courbe.

8. Unité selon l'une quelconque des revendications 1 à 7, **caractérisée en ce que** lesdits moyens de convoyage (7) comprennent au moins une trémie.

9. Unité selon l'une quelconque des revendications 2 à 7, **caractérisée en ce que** lesdits moyens de convoyage (7) comprennent au moins une trémie, et **en ce que** lesdits moyens de séparation (9) comprennent au moins une cloison, activée par lesdits moyens de détection (8) pour fermer ou ouvrir le fond de ladite trémie (7).

10. Unité selon l'une quelconque des revendications 1 à 3, **caractérisée en ce qu'**elle comprend, des moyens de transfert (2), associés à ladite ligne de sortie de ladite machine d'emballage (2) et le retrait de produits emballés (3) dans une configuration sensiblement verticale (A) et leur libération dans les logements (4a) de la bande convoyeuse (4) dans une configuration sensiblement horizontale (B).

11. Unité selon l'une quelconque des revendications 1 à 10, **caractérisée en ce que** ladite bande convoyeuse (4) est actionnée d'une manière continue.

12. Unité selon l'une quelconque des revendications 1 à 11, **caractérisée en ce que** ladite bande convoyeuse (4) est alignée verticalement par rapport à ladite ligne d'alimentation (5).

13. Unité selon l'une quelconque des revendications 1 à 12, **caractérisée en ce que** ladite bande convoyeuse (4) s'étend latéralement, à savoir transversalement par rapport à ladite machine d'emballage (2).

14. Unité selon l'une quelconque des revendications 1 à 13, **caractérisée en ce que** ladite ligne d'alimentation (5) de ladite encaisseuse est actionnée pas à pas.

15. Unité selon la revendication 14, **caractérisée en ce que** ladite ligne d'alimentation (5) est activée par lesdits moyens de détection (8).

16. Unité selon l'une quelconque des revendications précédentes, **caractérisée en ce que** ladite machine d'emballage (2) est une ensacheuse.

17. Unité selon l'une quelconque des revendications précédentes, **caractérisée en ce que** lesdits produits (3) sont des paquets de forme tubulaire.
